# EUROPÄISCHE PATENTSCHRIFT

(11) **EP 1 307 361 B1**
(45) Veröffentlichungstag und Bekanntmachung des Hinweises auf die Patenterteilung: **17.08.2005**
(21) Anmeldenummer: 01949214.9
(22) Anmeldetag: 29.05.2001
(51) Int. Cl.: B60R 21/20

(54) **AIRBAGMODUL**
AIRBAG MODULE
MODULE AIRBAG

(30) Priorität: 21.06.2000 DE 10030471
(43) Veröffentlichungstag der Anmeldung: 07.05.2003
(73) Patentinhaber: ROBERT BOSCH GMBH, 70442 Stuttgart (DE)
(72) Erfinder: MATTES, Bernhard, 74343 Sachsenheim (DE)
(86) Internationale Anmeldenummer: PCT/DE2001/002037
(87) Internationale Veröffentlichungsnummer: WO 2001/098116

(56) Entgegenhaltungen:
- EP-A- 0 565 209
- DE-A- 19 855 838
- US-A- 4 974 873

## Beschreibung

### Stand der Technik

Die vorliegende Erfindung betrifft ein Airbagmodul, das einen Gasgenerator, eine Zündeinrichtung und einen Airbag aufweist und das mit einer Verriegelungsvorrichtung und einer elektrischen Kontaktierungsvorrichtung versehen ist, welche bewirken, dass das Airbagmodul beim Einsetzen in einen im Fahrzeug vorhandenen Aufnahmeschacht mechanisch verriegelt und eine elektrische Verbindung zwischen der Zündeinrichtung und einem Steuergerät hergestellt wird.

Aus der Gattungsbildenden US 6,007,087 ist ein solches Airbagmodul bekannt, das in einem Aufnahmeschacht am Lenkrad eingesetzt werden kann. Dabei sind die Verriegelungsvorrichtung und die elektrische Kontaktierung so ausgeführt, dass es bei einem Einsetzen des Airbagmoduls in den Aufnahmeschacht ohne Anwendung eines Werkzeugs automatisch zu einer mechanischen Verriegelung und zur einer elektrischen Verbindung zwischen dem Airbagmodul und einem Steuergerät kommt. Allerdings benötigt man, um das Airbagmodul aus dem Aufnahmeschacht wieder heraus zu nehmen, spezielles Werkzeug. Somit ist der Einbau des Airbagmoduls in den Aufnahmeschacht erleichtert, eine Entnahme des Airbagmoduls aber erschwert.

Es gibt Situationen, in denen ein Airbag dringend deaktiviert werden sollte, so dass er bei einem Fahrzeugcrash nicht auslöst. Das trifft insbesondere auf den Beifahrerairbag zu, wenn auf dem Beifahrersitz ein Kind oder eine Person von relativ kleiner Körpergröße sitzt. Erfahrungsgemäß können auslösende Airbags bei solchen Personen schwere, sogar tödliche Verletzungen hervorrufen. Nicht nur bei der Belegung des Beifahrersitzes mit einem Kind oder einem Erwachsenen kleiner Körpergröße sondern auch bei der Belegung mit irgend einem Gegenstand, z.B. einem Gepäckstück, soll die Auslösung des Airbags in jedem Fall unterbunden werden. Es gibt Methoden, mit denen die Art der Sitzbelegung erkannt wird, und bei einer entsprechenden Belegungsart sperrt dann das Steuergerät für den Beifahrerairbag dessen Auslösung bei einem Fahrzeugcrash. Auch wenn ein Kindersitz, insbesondere ein rückwärts gerichteter Kindersitz, auf dem Beifahrersitz abgestellt ist, muß eine Auslösung des Beifahrerairbags ausgeschlossen werden. So gibt es Erkennungssysteme, die an ein Steuergerät für den Beifahrerairbag eine Nichtauslöse-Information abgeben, wenn auf dem Beifahrersitz ein Kindersitz abgestellt ist. Im einfachsten Fall kann der Fahrer oder Beifahrer durch eine Schalterbetätigung den Beifahrerairbag deaktivieren, wenn eine der vorangehend erwähnten Sitzbelegungssituationen gegeben ist.

Bei all den genannten Methoden wird lediglich die Übertragung von Zündbefehlen an die Zündvorrichtung des Beifahrerairbags unterbrochen. Da der Airbag zusammen mit seinem Gasgenerator und seiner Zündeinrichtung im Fahrzeug aber installiert bleibt, besteht die Gefahr, dass es doch zu einer Fehlauslösung z.B. auf Grund einer elektrostatischen Entladung kommt. Eine Fehlauslösung kann auch durch zu hohe Temperatur, z.B. bei einem Fahrzeugbrand, erfolgen. Eine hundertprozentige Sicherheit gegen eine Fehlauslösung des Airbags kann nur dadurch erreicht werden, dass das gesamte Airbagmodul mit dem Gasgenerator und der Zündeinrichtung aus dem Fahrzeug entfernt wird. Nicht nur ein Fachmann sondern auch der Fahrer bzw. der Beifahrer sollten in der Lage sein, das Airbagmodul ohne Werkzeug aus dem Fahrzeug auszubauen und auch wieder einzubauen.

Der Erfindung liegt daher die Aufgabe zugrunde, ein Airbagmodul der eingangs genannten Art anzugeben, das mit wenigen Handgriffen aus- und eingebaut werden kann. Dabei soll ausgeschlossen werden, dass es durch unsachgemäßes Hantieren zu einer Auslösung des Airbags kommt.

### Vorteile der Erfindung

Die genannte Aufgabe wird mit den Merkmalen des Anspruchs 1 dadurch gelöst, dass das Airbagmodul mit einer Verriegelungsvorrichtung und einer elektrischen Kontaktierungsvorrichtung versehen ist, welche bewirken, dass das Airbagmodul beim Einsetzen in einen im Fahrzeug vorhandenen Aufnahmeschacht mechanisch verriegelt und eine elektrische Verbindung zwischen der Zündeinrichtung und einem Steuergerät hergestellt wird. Dabei sind die Verriegelungsvorrichtung und die elektrische Kontaktierungsvorrichtung so ausgebildet, dass beim Einsetzen des Airbagsmoduls in den Aufnahmeschacht zuerst die mechanische Verriegelung und anschließend die elektrische Kontaktierung erfolgt und beim Herausnehmen des Airbagsmoduls aus dem Aufnahmeschacht zuerst die elektrische Kontaktierung und anschließend die mechanische Verriegelung gelöst wird.

Es ist mindestens ein Betätigungselement vorhanden, das einerseits mit der Verriegelungsvorrichtung gekoppelt ist, welche eine kraftschlüssige Verbindung zwischen dem Airbagmodul und einem Tragrahmen im Aufnahmeschacht herstellt, und das andererseits mit einer Kontaktierungsvorrichtung gekoppelt ist, welche Kontakte am Airbagmodul mit den entsprechenden Kontakten im Aufnahmeschacht in Verbindung bringt.

Ein Airbagmodul mit den genannten Merkmalen kann mit wenigen Handgriffen ohne Spezialwerkzeug aus dem Aufnahmeschacht herausgenommen und auch wieder eingesetzt werden. Somit kann jeder, z.B. der Fahrer oder Beifahrer, insbesondere den Beifahrerairbag deinstallieren, um so eine hundertprozentige Gewißheit zu haben, dass der Beifahrerairbag nicht ausgelöst wird, wenn das die Belegungssituation des Beifahrersitzes erfordert. Die beanspruchte Reihenfolge von mechanischer Verriegelung und elektrischer Kontaktierung gewährleistet, dass auf keinen Fall Auslösesignale zum Airbagmodul übertragen werden können, wenn nicht das Airbagmodul sicher im Aufnahmeschacht verriegelt ist. Wenn nämlich das Airbagmodul zuerst im Aufnahmeschacht verriegelt wird und nur nach korrekter Verriegelung die anschließende elektrische Kontaktierung möglich ist, wird ausgeschlossen, dass ein nicht ordnungsgemäß verriegeltes Airbagmodul ausgelöst wird. Ein nicht richtig verriegeltes Airbagmodul könnte dann z.B. bei einem Heckaufprall aus dem Aufnahmeschacht herausgerissen werden und Fahrzeuginsassen verletzen.

Vorteilhafte Weiterbildungen der Erfindung gehen aus den Unteransprüchen hervor.

Vorteilhafterweise ist das Betätigungselement ein Hebel, der von der aus dem Aufnahmeschacht weisenden Frontseite des Airbagsmoduls her zugängig und in zwei Richtungen schwenkbar ist. Bei Schwenken des Hebels in eine Richtung erfolgt zuerst die Verriegelung und dann die elektrische Kontaktierung und bei Schwenken des Hebels in die andere Richtung werden zuerst die elektrischen Kontakte gelöst und dann die Verriegelung aufgehoben.

Es ist zweckmäßig, dass beim Herausnehmen des Airbagsmoduls aus dem Aufnahmeschacht automatisch die Kontakte der Zündeinrichtung kurzgeschlossen werden. Mit diesem Kurzschluß erkennt das Steuergerät, dass das Airbagmodul mit seiner Zündeinrichtung entfernt worden ist und kann dann eine Airbag-Deaktivierungsanzeige im Fahrzeug ansteuern.

Die Kontaktierungsvorrichtung kann aus Kontaktstiften und Kontaktbuchsen besteht, wobei die Kontaktstifte oder die Kontaktbuchsen am Airbagmodul und die Kontaktbuchsen oder die Kontaktsstifte im Aufnahmeschacht angeordnet sind. Die Kontaktierungsvorrichtung ebenso aus einem Übertrager mit einem ersten, ein oder mehrere Wicklungen tragenden Schalenkern und einem zweiten, ein oder mehrere Wicklungen tragenden Schalenkern besteht, wobei einer der beiden Schalenkerne am Airbagmodul und der andere Schalenkern im Aufnahmeschacht angeordnet ist.

### Zeichnung

Anhand von in der Zeichnung dargestellten Ausführungsbeispielen wird nachfolgend die Erfindung näher erläutert. Es zeigen:

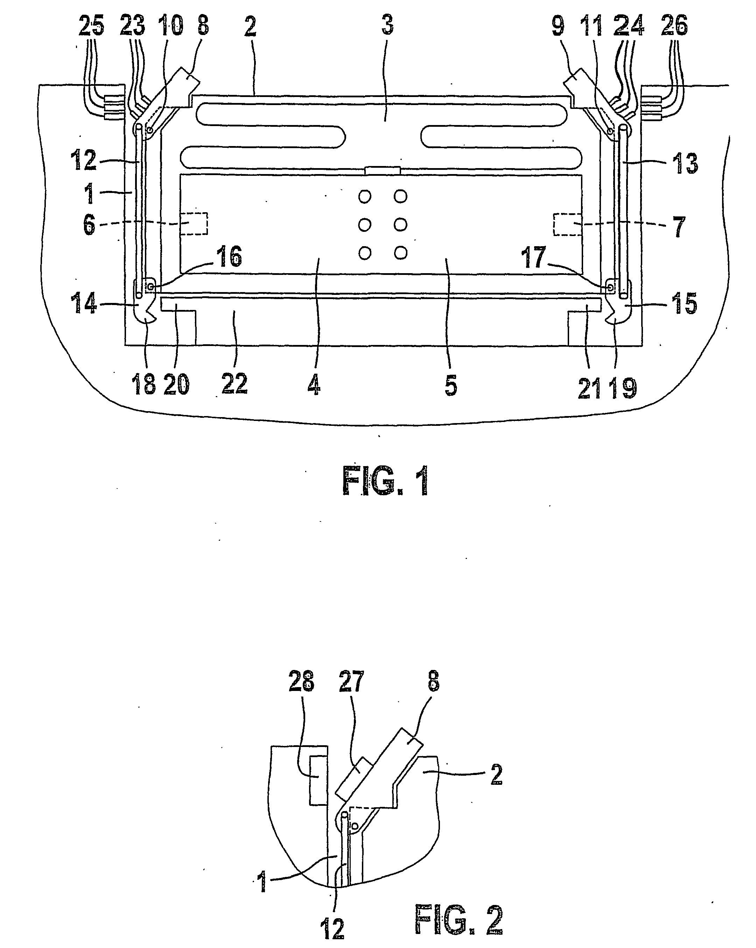

Figur 1 einen Querschnitt durch ein in einen Aufnahmeschacht eingesetztes Airbagmodul und
Figue 2 eine induktive Kontaktierungsvorrichtung für das Airbagmodul.

### Beschreibung eines Ausführungsbeispiels

Die Figur 1 der Zeichnung zeigt einen Querschnitt durch ein in einen Aufnahmeschacht 1 eingesetzes Airbagmodul 2. Das Airbagmodul 2 besteht im wesentlichen aus einem zusammengefalteten Airbag 3, der in dem Ausführungsbeispiel mit zwei Gasgeneratoren 4 und 5 gekoppelt ist. Mit zwei Gasgeneratoren 4, 5 besteht die Möglichkeit einer zweistufigen Auslösung des Airbags 3. Das Airbagmodul 2 kann aber auch mit nur einem einzigen Gasgenerator ausgestattet sein. Zu jedem Gasgenerator 4, 5 gehört eine Zündeinrichtung 6, 7. Die Zündeinrichtung 6, 7 jedes Gasgenerators 4, 5 wird von einem (in der Zeichnung nicht dargestellten) Steuergerät im Falle eines Fahrzeugcrashes angesteuert. Auch führt das Steuergerät eine ständige Diagnose der Zündeinrichtungen 6 und 7 durch, indem es den Widerstand der Zündeinrichtung 6, 7 misst. Weicht der Widerstand der jeweiligen Zündeinrichtung 6, 7 von einem vorgegebenen Wert über ein gewisses Maß hinaus ab, so erkennt das Steuergerät das als Fehlfunktion und steuert dementsprechend eine Funktionsanzeige für den Airbag im Fahrzeug an. Ebenso können Kurzschlüsse der einzelnen Zündeinrichtungen nach Plus oder Masse der Batteriespannung oder zu benachbarten Zündschaltkreisen diagnostiziert werden.

Der Aufnahmeschacht 1 für das Airbagmodul 2 kann sich z.B. im Lenkrad oder im Armaturenbrett vor dem Beifahrersitz oder auch in den Seitentüren oder in den Sitzlehnen befinden. Für den Aufnahmeschacht 1 sollte eine Abdeckung vorhanden sein, mit der der Aufnahmeschacht 1 nach Herausnahme des Airbagsmoduls 2 verschlossen werden kann.

Das Airbagmodul 2 ist mit Betätigungselementen in Gestalt zweier Hebel 8 und 9 ausgestattet, welche von der aus dem Aufnahmeschacht 1 weisenden Frontseite des Airbagsmoduls 2 her zugängig sind. Mit diesen Hebeln 8 und 9 ist es möglich, wie nachfolgend noch detallierter beschrieben, das Airbagmoduls 2 im Aufnahmeschacht 1 zum einen mechanisch zu verrriegeln und zum anderen eine elektrische Verbindung zwischen den Zündeinrichtungen 6, 7 und einem an irgendeiner anderen Stelle im Fahrzeug untergebrachten Steuergerät herzustellen.

Die beiden Hebel 8 und 9 sind an gegenüber liegenden Seiten des Airbagsmoduls 2 im Bereich seiner Frontseite um eine Achse 10, 11 in zwei Richtungen schwenkbar gelagert. Jeder Hebel 8, 9 ist über eine Schiene 12, 13 mit einem Riegel 14, 15 verbunden, der an der in das Innere des Aufnahmeschachts 1 weisenden Seite des Airbagsmoduls 2 ebenfalls um eine Achse 16, 17 schwenkbar gelagert ist. Die Riegel 14, 15 weisen eine Rastnase 18, 19 auf, welche beim Verriegeln des Airbagsmoduls 2 hinter Vorsprünge 20 und 21 in einem sich im Aufnahmeschacht 1 befindenden, mit der Fahrzeugkarosserie verankerten Tragrahmen 22 greifen.

Die Figur 1 der Zeichnung zeigt die Hebel 8 und 9 in eine Richtung geschwenkt, bei der die Riegel 14 und 15 nicht eingerastet sind, so dass das Airbagmodul 2 aus dem Aufnahmeschacht 1 entnommen werden kann. Werden die Hebel 8 und 9 in die andere Richtung geschwenkt, so werden über die Schienen 12 und 13 die Riegel 14 und 15 zum Tragrahmen 22 hin bewegt, so dass dann deren Rastnasen 18 und 19 hinter die Vorsprünge 20 und 21 des Tragrahmens 22 greifen. Damit wäre das Airbagmodul 2 im Aufnahmeschacht 1 mechanisch verriegelt.

Die Hebel 8 und 9 sind an ihrer der Innenwand des Aufnahmeschachts 1 zugewandten Seite jeweils mit drei Steckerstiften 23 und 24 versehen. Passend zu den Steckerstiften 23 und 24 sind in der Wand des Aufnahmeschachts 1 Kontaktbuchsen 25 und 26 eingelassen. Zwei der jeweils drei Steckerstifte 23 und 24 an den Hebeln 8 und 9 sind jeweils mit dem Zündelement 6, 7 verbunden, und der dritte der drei Steckerstifte 23, 24 ist mit Masse des Gehäuses der Gasgeneratoren 4, 5 verbunden. Die Verbindungsleitungen zwischen den Zündeinrichtungen 6, 7 und der Gehäusemaße der Gasgeneratoren 4 und 5 zu den Steckerstiften 23, 24 sind in der Figur nicht eingezeichnet. Die Kontaktbuchsen 25 und 26 sind ebenfalls über nicht dargestellte Verbindungsleitungen mit einem Steuergerät verbunden.

Werden die Hebel 8 und 9 so geschwenkt, dass das Airbagmodul 2 mechanisch verriegelt wird, so kommt es auch zu einem Eingriff der Steckerstifte 23, 24 in die Kontaktbuchsen 25, 26. Die Verriegelungsmechanik 8, 9, 12, 13, 14, 15 und die elektrische Kontaktierungsvorrichtung 23, 24, 25, 26 sind so ausgestaltet, dass beim Schwenken der Hebel 8 und 9 in die Verriegelungsrichtung zuerst die mechanische Verriegelung mit dem Tragrahmen 22 erfolgt und anschließend die Kontaktstifte 23, 24 in die Kontaktbuchsen 25 und 26 eingreifen. Das heißt, beim Einsetzen des Airbagsmoduls 2 in den Aufnahmeschacht 1 wird zuerst die mechanische Verriegelung und anschließend die elektrische Kontaktierung vorgenommen. Im umgekehrten Fall, wenn das Airbagmodul 2 aus dem Aufnahmeschacht 1 herausgenommen werden soll, wird durch Umlegen der Hebel 8 und 9 zuerst der elektrische Kontakt gelöst und anschließend die mechanische Verriegelung aufgehoben.

Eine andere Variante der Kontaktierungsvorrichtung zeigt die Figur 2, in der ein Ausschnitt des Airbagmoduls 2 mit einem Hebel 8 dargestellt ist. Diese Kontaktierungsvorrichtung besteht aus einem Übertrager mit einem ersten, ein oder mehrere Wicklungen tragenden Schalenkern 27 und einem zweiten, ein oder mehrere Wicklungen tragenden Schalenkern 28. Der eine Schalenkern 27 ist am Hebel 8 und der andere Schalenkern 28 an der Innenseite des Aufnahmeschachtes 1 angeordnet. Wird der Hebel 8 zur Verriegelung nach außen geschwenkt, so bewegt sich der Schalenkern 27 am Hebel 8 auf den Schalenkern 28 an der Innenseite des Aufnahmeschachtes 1 zu, wobei es zu einer induktiven Kopplung zwischen den Schalenkernen 27 und 28 bzw. den Wicklungen in den Schalenkernen kommt. In dieser Stellung der Schalenkerne 27 und 28 kann eine Signalübertragung zwischen der Zündeinrichtung 6, 7 und dem Steuergerät erfolgen. Durch Schwenken des Hebels 8 in die andere Richtung werden die Schalenkerne 27 und 28 voneinander getrennt und die induktive Kopplung unterbrochen.

Die spezielle Reihenfolge von mechanischer Verriegelung und elektrischer Kontaktierung beim Einsetzen und Herausnehmen des Airbagsmoduls 2 aus dem Aufnahmeschacht 1 kann natürlich auch mit anderen Mechanismen erfolgen als den beispielhaft in der Zeichnung dargestellten Mitteln. Vorstellbar ist beispielsweise auch, dass die mechanische Verriegelung und die elektrische Kontaktierung durch elektrisch betätigbare Antriebsvorrichtungen, die sich in den Seitenwänden des Aufnahmeschachts 1 befinden, per Knopfdruck betätigt werden können.

Sobald zur Herausnahme des Airbagsmoduls 2 aus dem Aufnahmeschacht 1 der elektrische Kontakt gelöst wird, sollten die Kontaktstifte 23, 24, welche zu Anschlüssen der Zündeinrichtungen 6, 7 gehören, automatisch mit einer Kurzschlußbrücke überbrückt werden. Die Kurzschlußbrücke besitzt bekannterweise Kontaktfedern, welche sich beim Herausziehen der Kontaktstiffte 23, 24 aus den Kontaktbuchsen 25, 26 auf die Kontaktstifte 23, 24 legen und welche beim Einführen der Kontaktstifte 23, 24 in die Kontaktbuchsen 25, 26 von den Kontaktstiften 23, 24 weggedrückt werden.

## Patentansprüche

1. Airbagmodul, das einen Gasgenerator, eine Zündeinrichtung und einen Airbag aufweist und das mit einer Verriegelungsvorrichtung und einer elektrischen Kontaktierungsvorrichtung versehen ist, welche bewirken, dass das Airbagmodul beim Einsetzen in einen im Fahrzeug vorhandenen Aufnahmeschacht mechanisch verriegelt und eine elektrische Verbindung zwischen der Zündeinrichtung und einem Steuergerät hergestellt wird, **dadurch gekennzeichnet, dass** die Verriegelungsvorrichtung (8, 9, 12, 13, 14, 15) und die Kontaktierungsvorrichtung (23, 24, 25, 26, 27, 28) so ausgebildet sind, dass beim Einsetzen des Airbagmoduls (2) in den Aufnahmeschacht (1) zuerst die mechanische Verriegelung und anschließend die elektrische Kontaktierung erfolgt und beim Herausnehmen des Airbagsmoduls (2) aus dem Aufnahmeschacht (1) zuerst die elektrische Kontaktierung und anschließend die mechanische Verriegelung gelöst wird, wobei mindestens ein Betätigungselement (8, 9) vorhanden ist, das einerseits mit der Verriegelungsvorrichtung (14, 15) gekoppelt ist, welche eine kraftschlüssige Verbindung zwischen dem Airbagmodul (2) und einem Tragrahmen (21) im Aufnahmeschacht (1) herstellt und das andererseits mit der Kontaktierungsvorrichtung (23, 24, 25, 26, 27, 28) gekoppelt ist, welche Kontakte (23, 24, 27) am Airbagmodul (2) mit entsprechenden Kontakten (25, 26, 28) im Aufnahmeschacht (1) in Verbindung bringt.

2. Airbagmodul nach Anspruch 1, **dadurch gekennzeichnet, dass** das mindestens eine Betätigungselement ein Hebel (8, 9) ist, der von der aus dem Aufnahmeschacht (1) weisenden Frontseite des Airbagsmoduls (2) her zugängig und in zwei Richtungen schwenkbar ist, dass bei Schwenken des Hebels (8, 9) in eine Richtung zuerst die Verriegelung und dann die elektrische Kontaktierung erfolgt und dass bei Schwenken des Hebels (8, 9) in die andere Richtung zuerst die elektrische Kontaktierung gelöst und dann die Verriegelung aufgehoben wird.

3. Airbagmodul nach Anspruch 1, **dadurch gekennzeichnet, dass** Mittel vorhanden sind, welche beim Herausnehmen des Airbagsmoduls (2) aus dem Aufnahmeschacht (1) automatisch die Kontakte der Zündeinrichtung (6, 7) kurzschließen .

4. Airbagmodul nach einem der Ansprüche 1 bis 3, **dadurch gekennzeichnet, dass** die Kontaktierungsvorrichtung aus Kontaktstiften (23, 24) und Kontaktbuchsen (25, 26) besteht, wobei die Kontaktstifte (23, 24) oder die Kontaktbuchsen (25, 26) am Airbagmodul (2) und die Kontaktbuchsen (25, 26) oder die Kontaktsstifte (23, 24) im Aufnahmeschacht (1) angeordnet sind.

5. Airbagmodul nach einem der Ansprüche 1 bis 3, **dadurch gekennzeichnet, dass** die Kontaktierungsvorrichtung aus einem Übertrager mit einem ersten, ein oder mehrere Wicklungen tragenden Schalenkern (27) und einem zweiten, ein oder mehrere Wicklungen tragenden Schalenkern (28) besteht, wobei einer der beiden Schalenkerne am Airbagmodul (2) und der andere Schalenkern im Aufnahmeschacht (1) angeordnet ist.

## Claims

1. Airbag module, which has a gas generator, a priming device and an airbag and which is provided with a locking device and an electric contact-connection device which cause the airbag module, when inserted into a receiving shaft present in the vehicle, to be mechanically locked and an electric connection between the priming device and a control unit to be produced, **characterized in that** the locking device (8, 9, 12, 13, 14, 15) and the contact-connection device (23, 24, 25, 26, 27, 28) are designed in such a manner that, when the airbag module (2) is inserted into the receiving shaft (1), first of all the mechanical locking takes place and then the electric contact connection takes place and, when the airbag module (2) is removed from the receiving shaft (1), first of all the electric contact connection is released and then the mechanical locking is released, there being at least one actuating element (8, 9) which, on the one hand, is coupled to the locking device (14, 15), which produces a frictional connection between the airbag module (2) and a supporting frame (21) in the receiving shaft (1), and which, on the other hand, is coupled to the contact-connection device (23, 24, 25, 26, 27, 28) which brings contacts (23, 24, 27) on the airbag module (2) into connection with corresponding contacts (25, 26, 28) in the receiving shaft (1).

2. Airbag module according to Claim 1, **characterized in that** the at least one actuating element is a lever (8, 9) which is accessible from the front side of the airbag module (2), which front side faces out of the receiving shaft (1), and is pivotable in two directions, **in that**, when the lever (8, 9) is pivoted in one direction, first of all the locking takes place and then the electric contact connection takes place, and **in that**, when the lever (8, 9) is pivoted in the other direction, first of all the electric contact connection is released and then the locking is cancelled.

3. Airbag module according to Claim 1, **characterized in that** there are means which, when the airbag module (2) is removed from the receiving shaft (1), automatically short-circuit the contacts of the priming device (6, 7).

4. Airbag module according to one of Claims 1 to 3, **characterized in that** the contact-connection device comprises contact pins (23, 24) and contact bushings (25, 26), the contact pins (23, 24) or the contact bushings (25, 26) being arranged on the airbag module (2) and the contact bushings (25, 26) or the contact pins (23, 24) being arranged in the receiving shaft (1).

5. Airbag module according to one of Claims 1 to 3, **characterized in that** the contact-connection device comprises a transformer having a first shell core (27) supporting one or more windings, and a second shell core (28) supporting one or more windings, one of the two shell cores being arranged on the airbag module (2) and the other shell core being arranged in the receiving shaft (1).

## Revendications

1. Module airbag présentant un générateur de gaz, un dispositif de déclenchement et un airbag, et pourvu d'un dispositif de verrouillage et d'un dispositif de contact électrique, pour verrouiller mécaniquement le module airbag, lors de sa mise en place dans un compartiment de réception dans un véhicule, et établir une liaison électrique entre le dispositif de déclenchement et un appareil de commande,
**caractérisé en ce que**
le dispositif de verrouillage (8, 9, 12, 13, 14, 15) et le dispositif de contact (23, 24, 25, 26, 27, 28) sont configurés pour que lors de la mise en place du module airbag (2) dans le compartiment de réception (1), le verrouillage mécanique s'effectue avant l'établissement du contact électrique, et lors du retrait du module airbag (2) hors du compartiment de réception (1), l'annulation du contact électrique s'effectue avant celle du verrouillage mécanique, avec au moins un élément d'actionnement (8, 9) qui, couplé d'une part au dispositif de verrouillage (14, 15), établit une liaison par combinaison de forces entre le module airbag (2) et un châssis de support (21) dans le compartiment de réception (1), et qui, couplé d'autre part au dispositif de contact (23, 24, 25, 26, 27, 28), relie des contacts (23, 24, 27) présents au niveau du module airbag (2) avec des contacts correspondants (25, 26, 28)présents dans le compartiment de réception (1).

2. Module airbag selon la revendication 1,
**caractérisé en ce qu'**
au moins un élément d'actionnement est un levier (8, 9) accessible à partir de la face frontale du module airbag (2) orientée hors du compartiment de réception (1) et pivotant dans deux directions, le pivotement du levier (8, 9) dans une direction provoque tout d'abord le verrouillage puis l'établissement du contact électrique et le pivotement du levier (8, 9) dans l'autre direction annule tout d'abord le contact électrique puis le verrouillage.

3. Module airbag selon la revendication 1,
**caractérisé en ce que**
des moyens sont prévus pour court-circuiter automatiquement les contacts du dispositif de déclenchement (6, 7) lors du retrait du module airbag (2) hors du compartiment de réception (1).

4. Module airbag selon l'une des revendications 1 à 3,
**caractérisé en ce que**
le dispositif de contact se compose de broches mâles (23, 24) et de broches femelles (25, 26), les broches mâles (23, 24) ou les broches femelles (25, 26) étant disposées au niveau du module airbag (2) et les broches femelles (25, 26) ou les broches mâles (23, 24) étant disposées dans le compartiment de réception (1).

5. Module airbag selon l'une des revendications 1 à 3,
**caractérisé en ce que**
le dispositif de contact se compose d'un translateur comportant un premier noyau en pot (27) portant un ou plusieurs enroulements et un deuxième noyau en pot (28) portant un ou plusieurs enroulements, l'un des deux noyaux en pot étant disposé au niveau du module airbag (2) tandis que l'autre noyau en pot se trouve dans le compartiment de réception (1).
